# DEMANDE DE BREVET EUROPEEN

(11) **EP 4 649 867 A1**
(43) Date de publication de la demande: **19.11.2025**
(21) Numéro de dépôt: 25153333.7
(22) Date de dépôt: 22.01.2025
(51) Int. Cl.: A47J 43/046, A47J 43/07

(54) **APPAREIL ÉLECTROMÉNAGER DE PRÉPARATION D' ALIMENTS**

(30) Priorité: 23.01.2024 FR 2400638
(71) Demandeur: SEB S.A., 69130 Ecully (FR)
(72) Inventeur: MORIN, Yoann, 69134 ECULLY CEDEX (FR); LHOMME, Gilles, 69134 ECULLY CEDEX (FR)
(74) Mandataire: SEB Développement

(57) **Abrégé**

L'invention concerne un appareil électroménager de préparation d'aliments, comprenant une base (100) et un ensemble de bol (200) destiné à être positionné dans la base (100),
dans lequel la base (100) comprend un dispositif de verrouillage (120) de l'ensemble de bol (200), avec un ergot de verrouillage (122) monté en translation par rapport à la surface de réception (110) selon un axe de translation parallèle à la surface de réception (110),
dans lequel l'embase (210) de l'ensemble de bol (200) comprend un agencement de verrouillage (220),
la base (100) comprenant un dispositif d'entrainement (130) couplé au dispositif de verrouillage (120) et prévu pour entrainer en translation l'ergot de verrouillage (122) entre une position verrouillée et une position déverrouillée.

## Description

### DOMAINE DE L'INVENTION

La présente invention concerne le domaine des appareils électroménagers de préparation d'aliments, notamment des robots culinaires, et concerne plus particulièrement le verrouillage d'un ensemble de bol sur une base d'un tel appareil électroménager.

### ETAT DE LA TECHNIQUE

Il existe différents types d'appareils électroménagers de préparation d'aliments, notamment les appareils comprenant une base ainsi qu'un ensemble de bol monté amovible par rapport à la base.

De tels appareils électroménagers, appelés aussi robots culinaires, comprennent des moyens permettant le traitement d'aliments présents dans l'ensemble de bol, par exemple par chauffage et/ou par une action mécanique sur les aliments.

Le robot culinaire peut ainsi comprendre un organe de chauffe permettant de chauffer l'ensemble de bol. Un tel organe de chauffe peut être positionné dans la base destinée à recevoir l'ensemble de bol, et/ou directement dans l'ensemble de bol auquel cas il est alimenté électriquement par la base par exemple.

De manière alternative ou additionnelle, le robot culinaire peut aussi être motorisé, avec notamment une base motorisée, et comprendre un outil de travail rotatif positionné à l'intérieur de l'ensemble de bol pour agir sur les aliments présents dans le bol. L'outil de travail rotatif peut par exemple permettre de réaliser des travaux de hachage, de pétrissage, de mélange, d'émulsion.

En fonction des modèles de robots culinaires, plusieurs types d'outils de travail rotatifs peuvent être prévus pour réaliser des travaux spécifiques tels que des émulsions, des préparations broyées, des mélanges, etc.

Pour des raisons de sécurité évidentes, il est utile de pouvoir verrouiller l'ensemble de bol sur la base, pour éviter notamment que l'ensemble de bol ne puisse être désolidarisé de la base pendant une préparation culinaire spécifique. Ceci est particulièrement vrai lorsque le robot culinaire est motorisé où il est nécessaire que le bol soit solidement fixé au robot durant le fonctionnement de ce dernier, étant donnés notamment la vitesse et le couple pouvant être développés par l'outil de travail rotatif.

Par ailleurs, il est pratique de pouvoir extraire le bol du robot pour, par exemple le vider ou le nettoyer.

Ainsi, la plupart des robots culinaires présentent un système de verrouillage permettant d'alternativement verrouiller ou déverrouiller l'ensemble de bol à la base du robot. Les documents EP3821774 et FR2908620 donnent des exemples de tels systèmes de verrouillage pour robot culinaire.

### EXPOSE DE L'INVENTION

Un objectif de la présente invention est de proposer un appareil électroménager de préparation d'aliments présentant un système de verrouillage de l'ensemble de bol à la base de l'appareil électroménager qui est simple, notamment en termes de fabrication de l'appareil, et qui ne vient pas gêner la manipulation et l'utilisation de l'appareil électroménager par un utilisateur.

Un objectif de la présente invention est également de proposer un appareil électroménager de préparation d'aliments présentant un système de verrouillage de l'ensemble de bol à la base de l'appareil électroménager qui a un design épuré et compact, et peut être nettoyé facilement.

Un objectif de la présente invention est en outre de proposer un appareil électroménager de préparation d'aliments présentant un système de verrouillage de l'ensemble de bol à la base de l'appareil électroménager dont le fonctionnement est indépendant du reste du fonctionnement de l'appareil électroménager, en particulier qui peut être totalement décorrélé d'autres systèmes de verrouillage de l'appareil électroménager, comme notamment le verrouillage du couvercle sur l'ensemble de bol.

A cette fin, on propose un appareil électroménager de préparation d'aliments, comprenant
une base ayant une surface de réception ;
un ensemble de bol comprenant une embase et un bol destiné à recevoir des aliments, l'embase ayant une surface de fond et le bol s'étendant à partir de l'embase du côté opposé à la surface de fond, l'ensemble de bol étant destiné à être positionné dans la base avec la surface de fond de l'embase placée en regard de la surface de réception ;
dans lequel la base comprend un dispositif de verrouillage de l'ensemble de bol, le dispositif de verrouillage comprenant un ergot de verrouillage monté en translation par rapport à la surface de réception selon un axe de translation parallèle à la surface de réception, l'ergot de verrouillage étant prévu pour s'étendre à travers un orifice d'ergot ménagé à travers la surface de réception, l'ergot de verrouillage ayant une portion active de verrouillage s'étendant selon une direction sensiblement parallèle à la surface de réception,
dans lequel l'embase de l'ensemble de bol comprend un agencement de verrouillage avec une paroi de verrouillage s'étendant à partir de la surface de fond, un orifice de verrouillage étant ménagé à travers la paroi de verrouillage, l'orifice de verrouillage étant destiné à recevoir la portion active de verrouillage de l'ergot de verrouillage,
la base comprenant un dispositif d'entrainement couplé au dispositif de verrouillage et prévu pour entrainer en translation l'ergot de verrouillage entre une position verrouillée où la portion active de verrouillage de l'ergot de verrouillage est insérée dans l'orifice de verrouillage de l'agencement de verrouillage pour verrouiller l'ensemble de bol sur la base, et une position déverrouillée dans laquelle l'ensemble de bol peut être déplacé par rapport à la base.

Des aspects préférés mais non limitatifs de cet appareil électroménager, pris seuls ou en combinaison, sont les suivants :
- la base comprend un axe de réception orthogonal à la surface de réception, l'axe de réception étant positionné sensiblement au centre de la surface de réception et étant confondu en position verrouillée avec un axe longitudinal central de l'ensemble de bol, l'axe de translation de l'ergot de verrouillage étant non sécant à l'axe de réception de la base.
- en position verrouillée, la portion active de verrouillage de l'ergot de verrouillage s'étend tangentiellement à un cercle parallèle à la surface de réception et ayant un centre passant par l'axe de réception.
- l'agencement de verrouillage comprend une cavité de verrouillage s'étendant vers l'intérieur à partir de la surface de fond de l'ensemble de bol, la cavité de verrouillage étant en partie formée par la paroi de verrouillage dans laquelle est ménagé l'orifice de verrouillage.
- la base comprend un carter de protection en saillie s'étendant vers l'extérieur à partir de la surface de réception, le carter de protection étant destiné à être reçu dans la cavité de verrouillage dans la position verrouillée.
- le carter de protection est prévu pour recevoir l'ergot de verrouillage de sorte que dans la position déverrouillée l'ergot de verrouillage est entièrement logé à l'intérieur du carter de protection, et dans la position verrouillée la portion active de verrouillage de l'ergot de verrouillage s'étend au moins partiellement vers l'extérieur du carter de protection dans l'orifice de verrouillage.
- la paroi de verrouillage dans laquelle est ménagé l'orifice de verrouillage s'étend vers l'intérieur à partir de la surface de fond de l'ensemble de bol de manière inclinée non perpendiculaire à la surface de fond de l'ensemble de bol.
- l'agencement de verrouillage comprend un élément en saillie s'étendant vers l'extérieur à partir de la surface de fond de l'ensemble de bol, l'élément en saillie étant en partie formé par la paroi de verrouillage dans laquelle est ménagé l'orifice de verrouillage, et dans lequel la surface de réception comprend une cavité de verrouillage s'étendant vers l'intérieur de la base et ayant une forme destinée à recevoir l'élément en saillie, l'orifice d'ergot étant ménagé dans une paroi de la cavité s'étendant à partir de la surface de réception.
- le dispositif de verrouillage comprend une pluralité d'ergots de verrouillage, chaque ergot de verrouillage étant destiné à coopérer avec un orifice de verrouillage respectif ménagé à travers la paroi de verrouillage de l'embase de l'ensemble de bol.
- au moins deux ergots de verrouillage parmi la pluralité d'ergots de verrouillage sont agencés parallèles l'un par rapport à l'autre, les au moins deux ergots de verrouillage étant montés en translation selon des axes de translation parallèles entre eux et s'étendant dans un plan de translation parallèle à la surface de réception.
- les au moins deux ergots de verrouillage sont configurés pour se déplacer dans le même sens de translation pour passer de la position verrouillée à la position déverrouillée, et réciproquement pour passer de la position déverrouillée à la position verrouillée.
- la base comprend une cavité de réception avec un fond formant la surface de réception, l'ensemble de bol étant destiné à être positionné dans la cavité de réception de la base, la cavité de réception et l'embase de l'ensemble de bol comprenant des éléments de détrompage coopérant pour autoriser un seul positionnement de l'ensemble de bol dans la cavité de réception de la base.
- les éléments de détrompage comprennent des méplats formés respectivement sur les parois latérales de la cavité de réception et l'embase de l'ensemble de bol.
- l'appareil électroménager comprend en outre un dispositif de détection de présence de l'ensemble de bol sur la base, le dispositif de détection comprenant des capteurs électroniques et/ou des capteurs mécanique pour détecter une présence de l'ensemble de bol sur la surface de réception de la base.
- l'appareil électroménager comprend en outre un dispositif de commande configuré pour commander le dispositif d'entrainement uniquement lorsque l'ensemble de bol est positionné sur la surface de réception de la base.
- l'appareil électroménager comprend en outre un moyen de mise sous tension de l'appareil et un moyen d'activation d'une préparation culinaire, le dispositif de commande étant configuré pour passer l'ergot de verrouillage de la position déverrouillée à la position verrouillée lors de l'activation d'une préparation culinaire.
- le dispositif de commande est configuré pour passer l'ergot de verrouillage de la position verrouillée à la position déverrouillée lors de l'arrêt d'une préparation culinaire.
- le dispositif d'entrainement comprend un moteur d'entrainement distinct d'un moteur prévu dans la base pour une préparation des aliments.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- La figure 1 est une vue en perspective d'un appareil électroménager ayant un ensemble de bol destiné à être reçu dans une base ;
- La figure 2 est une vue en perspective de dessous de l'ensemble de bol ;
- La figure 3 est une vue en perspective de dessus de la cavité de réception de la base ;
- La figure 4 est une vue en coupe illustrant l'ensemble de bol positionné dans la cavité de réception de la base, en position déverrouillée ;
- La figure 5 est une vue de dessus de la surface de réception illustrant le dispositif de verrouillage, en position déverrouillée ;
- La figure 6 est une vue de dessous de la surface de réception illustrant le dispositif de verrouillage, en position verrouillée ;
- La figure 7 est une vue en coupe illustrant l'ensemble de bol positionné dans la cavité de réception de la base, en position verrouillée ;
- La figure 8 est une vue de dessus de la surface de réception illustrant le dispositif de verrouillage, en position déverrouillée ;
- La figure 9 est une vue de dessous de la surface de réception illustrant le dispositif de verrouillage, en position verrouillée.

### DESCRIPTION DETAILLEE DE L'INVENTION

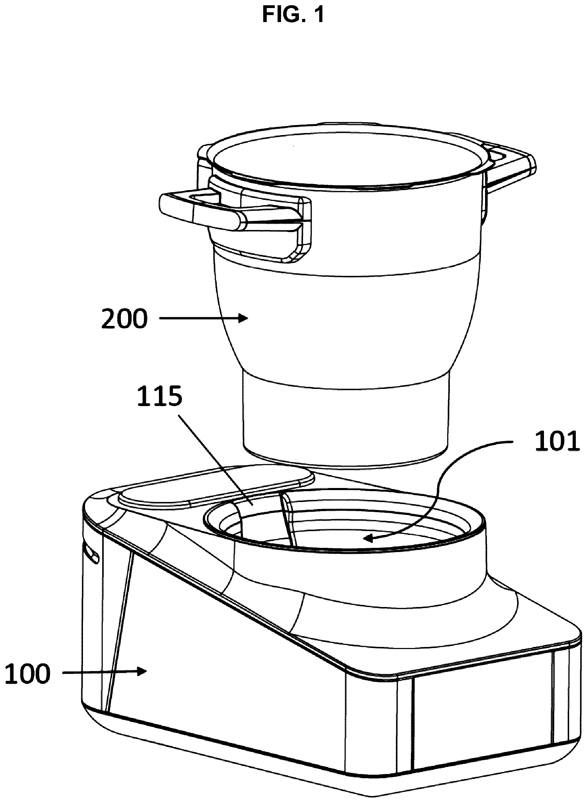

A la figure 1 est illustré un appareil électroménager qui est prévu notamment pour la préparation d'aliments et comprend une base 100 sur laquelle peut être positionné un ensemble de bol 200.

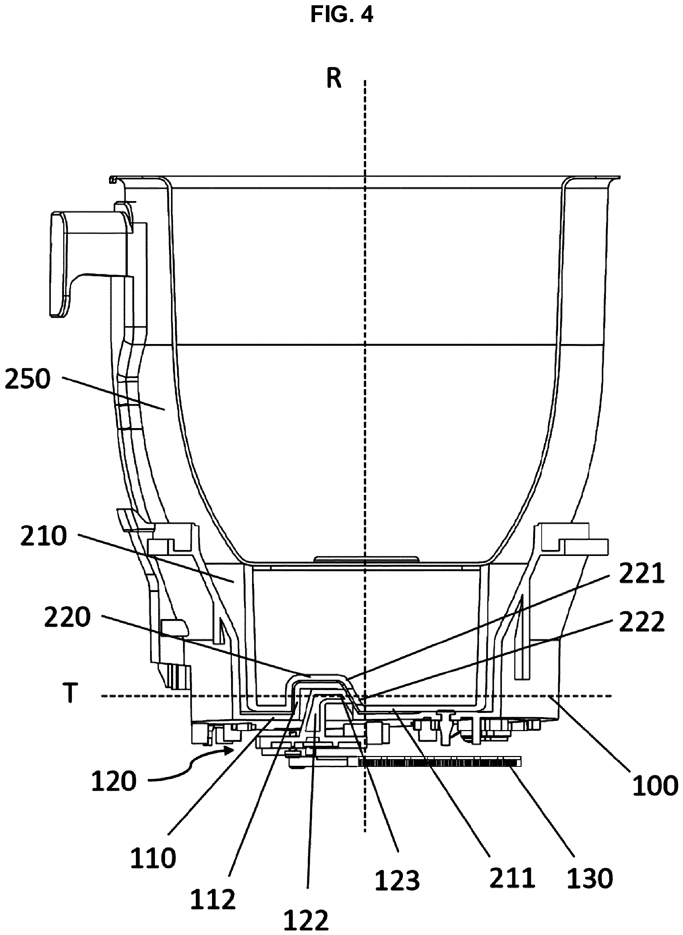

La base 100 comprend une surface de réception 110 sur laquelle l'ensemble de bol 200 est destiné à être posé. La base 100 comprend un axe de réception R orthogonal à la surface de réception 110 tel qu'illustré à la figure 4, un tel axe de réception R étant positionné sensiblement au centre de la surface de réception 110 et étant confondu avec un axe longitudinal central de l'ensemble de bol 200 lorsque celui-ci est en position dans la base 100.

Selon l'exemple illustré à la figure 1, la surface de réception 110 constitue le fond d'une cavité de réception 101 ménagée dans la base 100 et destinée à recevoir l'ensemble de bol 200.

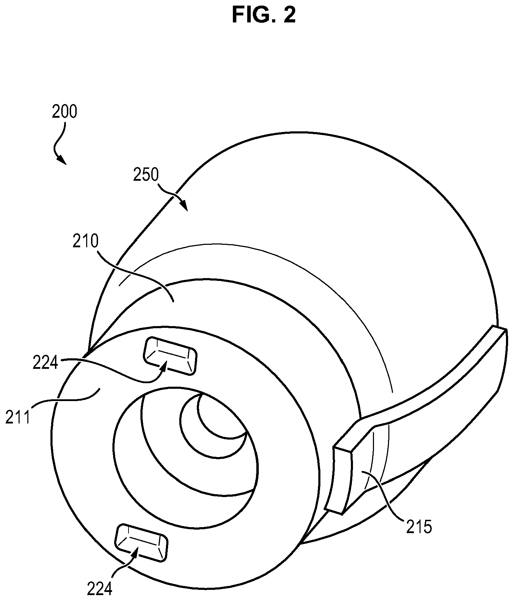

Comme illustré à la figure 2, l'ensemble de bol 200 comprend quant à lui une embase 210 et un bol 250 destiné à recevoir des aliments. L'embase 210 a une surface de fond 211 destinée à être placée en regard de la surface de réception 110 de la base 100 lorsque l'ensemble de bol 200 est positionné dans la base 100.

Le bol 250 s'étend à partir de l'embase 210 du côté opposé à la surface de fond 211. Il comprend une ouverture supérieure permettant un remplissage du bol 250 avec des aliments pas exemple. Un couvercle (non représenté) peut venir obturer cette ouverture afin d'enfermer le contenu du bol, notamment lorsque l'on souhaite faire fonctionner l'appareil électroménager.

Il est par ailleurs prévu un système de verrouillage spécifique qui permet de sécuriser le positionnement de l'ensemble de bol 200 sur la surface de réception 110 de la base 100.

La base 100 comprend ainsi un dispositif de verrouillage 120 prévu pour permettre un verrouillage de l'ensemble de bol 200 sur la base 100. Plus spécifiquement, le dispositif de verrouillage 120 est prévu pour coopérer avec un agencement de verrouillage 220 particulier de l'ensemble de bol 200.

Selon l'agencement proposé, le dispositif de verrouillage 120 comprend au moins un ergot de verrouillage 122 monté en translation par rapport à la surface de réception 110 selon un axe de translation T parallèle à la surface de réception 110. Dans l'exemple illustré sur les figures, deux ergots de verrouillage 122 sont prévus dans le dispositif de verrouillage 120, ce qui permet d'avoir non seulement un meilleur verrouillage de l'ensemble de bol 200 sur la base 100, mais également un meilleur équilibrage.

Chaque ergot de verrouillage 122 est prévu pour s'étendre à travers un orifice d'ergot 111 ménagé à travers la surface de réception 110.

Chaque ergot de verrouillage 122 a une portion active de verrouillage 123 s'étendant selon une direction sensiblement parallèle à la surface de réception 110. Comme on le verra plus loin, une telle portion active de verrouillage permet notamment de bloquer l'ensemble de bol 200 sur la base 100 en empêchant une translation selon l'axe de réception R, c'est-à-dire en particulier un retrait de l'ensemble de bol 200 par rapport à la base 100.

De tels ergots de verrouillage 122 ont par exemple une forme de crochets.

Les ergots de verrouillage 122 peuvent être actionnables indépendamment les uns des autres. Toutefois, il est préférable que les ergots de verrouillage 122 soient actionnables de manière synchrone. Ainsi, selon un exemple de réalisation, les ergots de verrouillage 122 sont montés sur une palette 121, cette palette 121 étant agencée sous la surface de réception 110 de la base 100.

Comme illustré aux figures 2, 4 et 7, l'embase 210 de l'ensemble de bol 200 comprend quant à elle un agencement de verrouillage 220 avec une paroi de verrouillage 221 s'étendant à partir de la surface de fond. Cette paroi de verrouillage 221 comprend un orifice de verrouillage 222 qui est de préférence traversant, et qui est destiné à recevoir la portion active de verrouillage 123 de l'ergot de verrouillage 122.

C'est le mouvement de translation des ergots de verrouillage 122 par rapport à l'ensemble de bol 200 qui permet le verrouillage ou déverrouillage de l'ensemble de bol 200 par rapport à la base 100.

De préférence, la base 100 comprend un dispositif d'entrainement 130 qui est couplé au dispositif de verrouillage 120 et prévu pour entrainer en translation l'ergot de verrouillage 122 entre une position verrouillée et une position déverrouillée. Si une palette 121 est utilisée, alors le dispositif de verrouillage 120 peut être prévu pour entrainer en translation directement la palette 121.

Un tel dispositif d'entrainement 130 comprend de préférence un moteur d'entrainement distinct du moteur qui serait prévu dans la base 100 pour entrainer un outil de coupe par exemple pour la préparation des aliments. Il peut se présenter sous la forme d'un moteur, d'un moto-réducteur ou d'un électroaimant par exemple.

Chaque ergot de verrouillage 122 peut donc être translaté entre une position verrouillée où l'ensemble de bol 200 est sécurisé sur la base 100 et ne peut pas être retiré de cette base 100 notamment, et une position déverrouillée dans laquelle l'ensemble de bol 200 peut être déplacé par rapport à la base 100.

Selon l'agencement proposé, dans la portion verrouillée la portion active de verrouillage 123 de l'ergot de verrouillage 122 est insérée dans l'orifice de verrouillage 222 de l'agencement de verrouillage 220 et verrouille de ce fait l'ensemble de bol 200 sur la base 100. En particulier, tout mouvement de translation selon l'axe de réception R est empêché et l'ensemble de bol 200 ne peut donc être retiré.

De préférence, l'axe de translation de l'ergot de verrouillage 122 est non sécant à l'axe de réception R de la base 100.

De préférence encore, la portion active de verrouillage 122 de l'ergot de verrouillage 122 s'étend tangentiellement à un cercle parallèle à la surface de réception 110 et ayant un centre passant par l'axe de réception R.

De préférence encore, les ergots de verrouillage 122 sont agencés pour être déplacés en translation selon des axes de translation T parallèles entre eux, dans un même plan, notamment un plan de translation parallèle à la surface de réception 110. De préférence, les ergots de verrouillage 122 sont agencés parallèles les uns par rapport aux autres.

Avantageusement, le sens de verrouillage des ergots de verrouillage 122 est le même pour tous les ergots de verrouillage 122.

L'agencement particulier proposé pour la translation des ergots de verrouillage 122 est particulièrement avantageux puisqu'il permet notamment d'avoir un système de verrouillage de conception très simple, tout en permettant un verrouillage très sécurisé de l'ensemble de bol 200 sur la base 100.

La simplicité de ce système de verrouillage implique une réduction des coûts de fabrication, réduit les risques de panne, et simplifie également les réparations qui s'avéreraient nécessaires.

De préférence, l'agencement de verrouillage 220 comprend une cavité de verrouillage 224 s'étendant vers l'intérieur à partir de la surface de fond 211 de l'ensemble de bol 200, l'une des parois de la cavité de verrouillage 224 étant formée par la paroi de verrouillage 221 présentée plus haut.

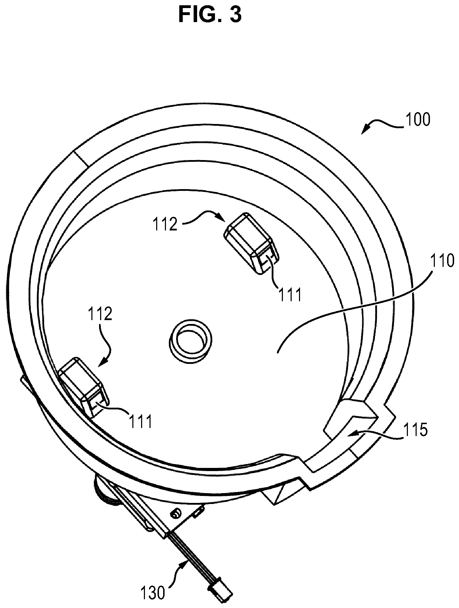

Selon un mode de réalisation préféré et tel qu'illustré à la figure 3, la base 100 comprend un carter de protection 112 faisant saillie vers l'extérieur à partir de la surface de réception 110 de la base 100. Un tel carter de protection 112 est destiné à être reçu dans la cavité de verrouillage 224 lorsque l'ensemble de bol 200 est positionné sur la surface de réception 110 de la base 100.

De préférence, le carter de protection 112 a une forme complémentaire de la cavité de verrouillage 224. Un tel agencement avec des formes complémentaires permet d'empêcher tout mouvement dans un plan parallèle à la surface de réception 110 de la base 100. Cela permet notamment d'empêcher une rotation de l'ensemble de bol 200 par rapport à la base selon l'axe de réception R.

Un tel carter de protection 112 est formé pour protéger l'ergot de verrouillage 122, notamment lorsque le système de verrouillage est en position déverrouillée et que la surface de réception 110 de la base 100 est laissée libre, en particulier lorsqu'il n'y a pas d'ensemble de bol 200 positionné sur la base 100. Ainsi, dans la position déverrouillée l'ergot de verrouillage 122 est entièrement logé à l'intérieur du carter de protection 112.

L'orifice d'ergot 111 est de préférence ménagé à travers une paroi latérale du carter de protection 112, de sorte que dans la position verrouillée, la portion active de verrouillage 123 de l'ergot de verrouillage 122 puisse s'étendre au moins partiellement vers l'extérieur du carter de protection 112 afin de pénétrer dans l'orifice de verrouillage 222.

Selon le mode de réalisation illustré aux figures 2, 4 et 7, la paroi de verrouillage 221 dans laquelle est ménagé l'orifice de verrouillage 222 s'étend vers l'intérieur à partir de la surface de fond 211 de l'ensemble de bol 200. De préférence, une telle paroi de verrouillage 221 s'étend de manière inclinée, c'est-à-dire qu'elle est non perpendiculaire à la surface de fond 211 de l'ensemble de bol 200. Si le carter de protection 112 a une forme complémentaire, alors il comprend également une paroi inclinée doté notamment de l'orifice d'ergot 111.

Un tel agencement avec une paroi de verrouillage 221 inclinée a plusieurs avantages. Tout d'abord, cela permet de former une forme en détrompeur, et facilite donc le positionnement de l'ensemble de bol 200 sur la base 100. En outre, cela permet de diriger les efforts d'arrachement au plus près de la partie la plus rigide de la portion active de verrouillage 123 de l'ergot de verrouillage 122.

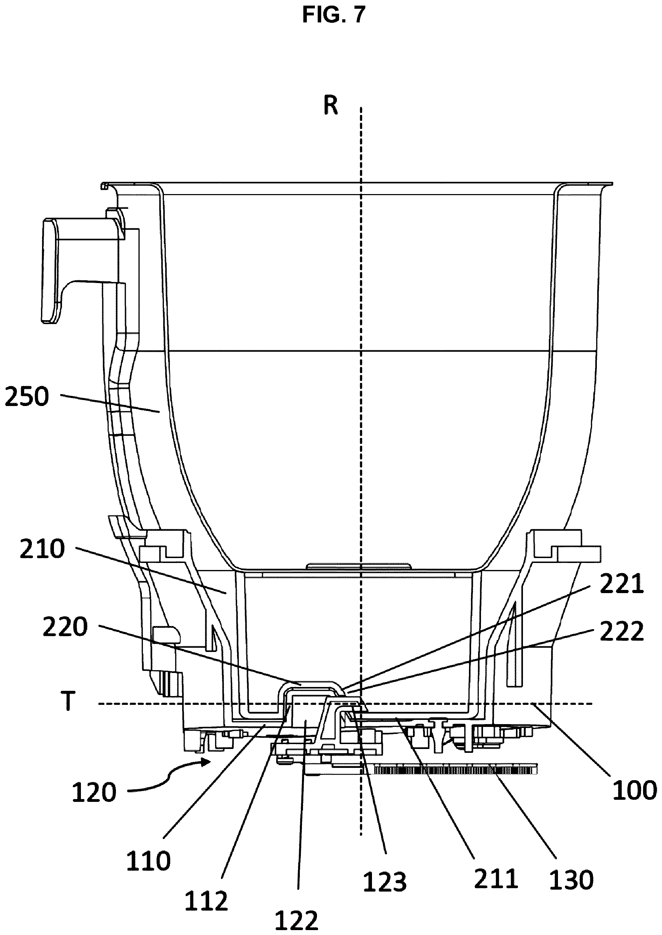

De préférence, la portion active de verrouillage 123 de l'ergot de verrouillage 122 a également une paroi inclinée, comme cela est illustré aux figures 4 et 7. Selon un tel agencement, lorsque le système de verrouillage est en position déverrouillée, la paroi inclinée de la portion active de verrouillage 123 de l'ergot de verrouillage 122 peut être positionnée dans le prolongement de la paroi inclinée du carter de protection 112. Un tel agencement avec une paroi inclinée de la portion active de verrouillage 123 de l'ergot de verrouillage 122 est également avantageuse en ce que le verrouillage par la portion active de verrouillage 123 est opérationnel dès que l'ergot de verrouillage 122 commence à être déployé depuis l'orifice d'ergot 111 dans l'orifice de verrouillage 222.

Selon un mode de réalisation alternatif non illustré, la configuration est inversée. Ainsi, l'agencement de verrouillage 220 comprend un élément en saillie s'étendant vers l'extérieur à partir de la surface de fond 211 de l'ensemble de bol 200, un tel élément en saillie étant en partie formé par la paroi de verrouillage 221 dans laquelle est ménagé l'orifice de verrouillage 223. Selon cette configuration, la surface de réception 110 peut comprendre une cavité de verrouillage s'étendant vers l'intérieur de la base 100 et ayant une forme destinée à recevoir l'élément en saillie, l'orifice d'ergot 111 étant alors ménagé dans une paroi de la cavité de verrouillage s'étendant à partir de la surface de réception 110. Dans un tel cas, les éléments en saillie s'étendant vers l'extérieur à partir de la surface de fond 211 de l'ensemble de bol 200 peuvent servir de pieds pour poser l'ensemble de bol 200 sur une surface de pose.

Comme on l'a précisé plus haut, la surface de réception 110 peut constituer le fond d'une cavité de réception 101 ménagée dans la base 100 et destinée à recevoir l'ensemble de bol 200.

Selon un mode de réalisation préféré, la cavité de réception 101 de la base 100 et l'embase 210 de l'ensemble de bol 200 comprennent des éléments de détrompage (115, 215) coopérant pour autoriser un seul positionnement de l'ensemble de bol 200 dans la cavité de réception 101 de la base 100.

Comme illustré aux figures 1 et4, de tels éléments de détrompage 115, 215 peuvent comprendre des méplats formés respectivement sur les parois latérales de la cavité de réception 101 de la base 100 et l'embase 210 de l'ensemble de bol 200.

De tels éléments de détrompage 115, 215 facilitent la mise en place de l'ensemble de bol 200 dans la cavité de réception 101 de la base 100, et permettent également de s'assurer que les éléments formant le système de verrouillage vont être correctement positionnés pour coopérer sans obstruction.

Selon un mode de réalisation préféré, l'appareil électroménager proposé comprend un dispositif de détection de présence de l'ensemble de bol 200 sur la base 100. Un tel dispositif de détection peut par exemple comprendre des capteurs électroniques et/ou des capteurs mécanique pour détecter une présence de l'ensemble de bol 200 sur la surface de réception 110 de la base 100.

Un tel dispositif de détection de présence peut être particulièrement avantageux si l'on souhaite que le système de verrouillage proposé ne puisse fonctionner que si l'ensemble de bol 200 est correctement positionné sur la base 100.

En effet, il peut être en outre prévu un dispositif de commande configuré pour commander le dispositif d'entrainement 130 uniquement lorsque l'ensemble de bol 200 est correctement positionné sur la surface de réception 110 de la base 100.

Selon un autre mode de réalisation préféré, l'appareil électroménager comprend aussi un moyen de mise sous tension de l'appareil et un moyen d'activation d'une préparation culinaire, le dispositif de commande étant configuré pour passer la couronne de verrouillage 121 de la position déverrouillée à la position verrouillée lors de l'activation d'une préparation culinaire. Réciproquement, le dispositif de commande peut être configuré pour passer la couronne de verrouillage 121 de la position verrouillée à la position déverrouillée lors de l'arrêt d'une préparation culinaire.

Un fonctionnement possible de l'appareil électroménager de préparation d'aliments est maintenant décrit, notamment en ce qui concerne le verrouillage et déverrouillage de l'ensemble de bol 200 sur la base 100.

Dans une première étape, l'ensemble de bol 200 est mis en place sur la surface de réception 110 de la base 100, et une connexion électrique des deux éléments est réalisée, par exemple par un système de broches. L'électronique de l'appareil électroménager détecte alors la présence de l'ensemble de bol 200.

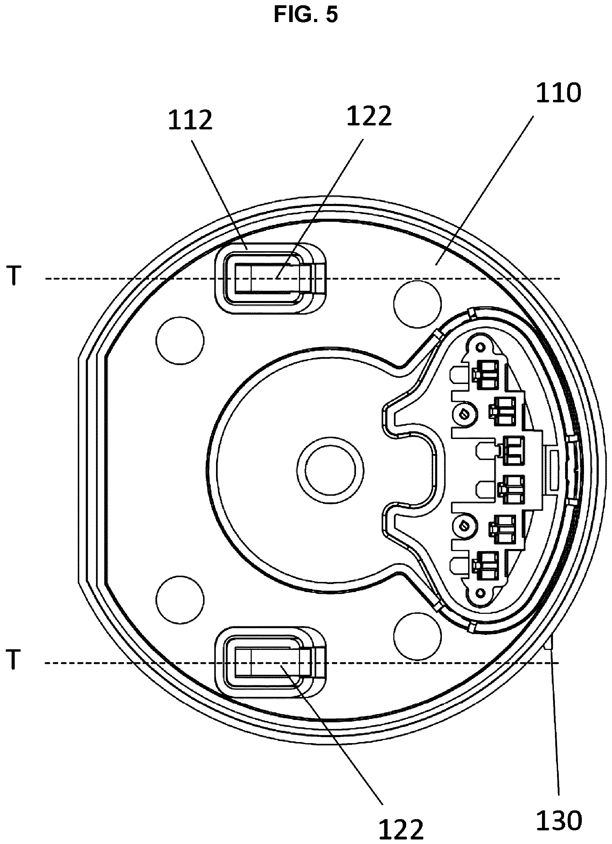

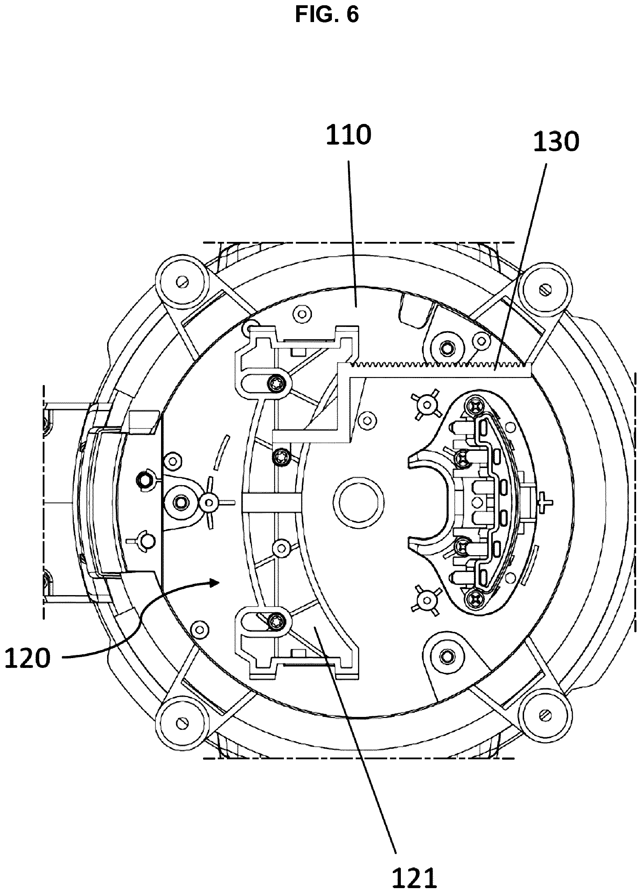

Lors de l'insertion ou du retrait de l'ensemble de bol 200 par rapport à la base 100, le système de verrouillage, et notamment chaque ergot de verrouillage 122, est positionné comme illustré aux figures 4, 5, et 6 en position déverrouillée. Selon cette position déverrouillée, les ergots de verrouillage 122 sont logés à l'intérieur des carters de protection 112 correspondants. Ainsi, non seulement ils ne s'opposent pas au déplacement de l'ensemble de bol 200 par rapport à la base 100, mais la surface de réception 100 est également libre de tout obstacle.

Dans une deuxième étape, au lancement d'une recette par l'utilisateur par exemple, et en fonction de la réponse de la première étape (électronique qui détecte ou non la présence de l'ensemble bol 200), une information est envoyée au sous-ensemble de motorisation du système de verrouillage 120, ce qui actionne la palette 121 pour déplacer en translation les ergots de verrouillage 122.

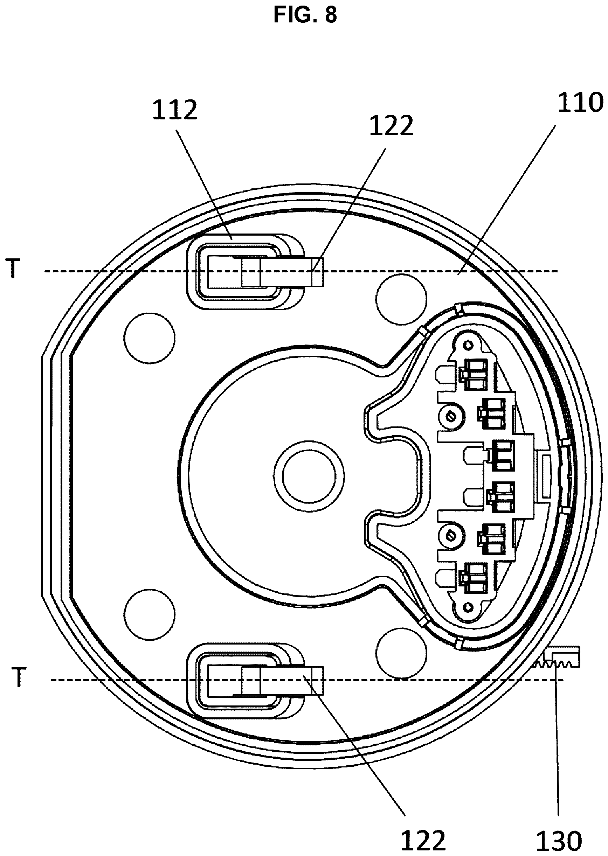

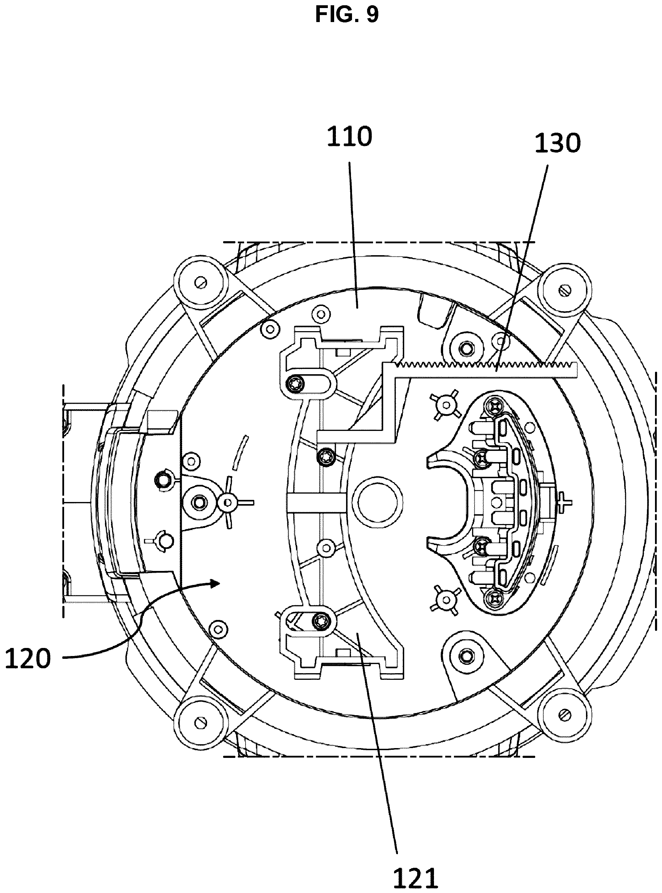

Les ergots de verrouillage 122 prenant par exemple la forme de crochets vont venir s'insérer dans les orifices de verrouillage 222 de l'ensemble de bol 200, comme cela est illustré aux figures 7, 8 et 9. L'ensemble de bol 200 est ainsi bridé sur le bloc moteur de la base 100. En effet, tout déplacement le long de l'axe de réception R est empêché par la coopération entre les ergots de verrouillage 122 et les orifices de verrouillage 222 de l'ensemble de bol 200. Par ailleurs, les déplacements selon un plan parallèle à la surface de réception 110 de la base 100 et la rotation autour de l'axe de réception R est empêché par les formes spécifiques des carters de protection 112 et des cavités de verrouillage 224 correspondantes.

## Revendications

1. Appareil électroménager de préparation d'aliments, comprenant une base (100) ayant une surface de réception (110) ;
un ensemble de bol (200) comprenant une embase (210) et un bol (250) destiné à recevoir des aliments, l'embase (210) ayant une surface de fond (211) et le bol (250) s'étendant à partir de l'embase (210) du côté opposé à la surface de fond (211), l'ensemble de bol (200) étant destiné à être positionné dans la base (100) avec la surface de fond (211) de l'embase (200) placée en regard de la surface de réception (110) ;
dans lequel la base (100) comprend un dispositif de verrouillage (120) de l'ensemble de bol (200), le dispositif de verrouillage (120) comprenant un ergot de verrouillage (122) monté en translation par rapport à la surface de réception (110) selon un axe de translation parallèle à la surface de réception (110), l'ergot de verrouillage (122) étant prévu pour s'étendre à travers un orifice d'ergot (111) ménagé à travers la surface de réception (110), l'ergot de verrouillage (122) ayant une portion active de verrouillage (123) s'étendant selon une direction sensiblement parallèle à la surface de réception (110),
dans lequel l'embase (210) de l'ensemble de bol (200) comprend un agencement de verrouillage (220) avec une paroi de verrouillage (221) s'étendant à partir de la surface de fond (211), un orifice de verrouillage (222) étant ménagé à travers la paroi de verrouillage (221), l'orifice de verrouillage (222) étant destiné à recevoir la portion active de verrouillage (123) de l'ergot de verrouillage (122),
la base (100) comprenant un dispositif d'entrainement (130) couplé au dispositif de verrouillage (120) et prévu pour entrainer en translation l'ergot de verrouillage (122) entre une position verrouillée où la portion active de verrouillage (123) de l'ergot de verrouillage (122) est insérée dans l'orifice de verrouillage (222) de l'agencement de verrouillage (220) pour verrouiller l'ensemble de bol (200) sur la base (100), et une position déverrouillée dans laquelle l'ensemble de bol (200) peut être déplacé par rapport à la base (100).

2. Appareil électroménager selon la revendication 1, dans lequel la base (100) comprend un axe de réception orthogonal à la surface de réception (110), l'axe de réception étant positionné sensiblement au centre de la surface de réception (110) et étant confondu en position verrouillée avec un axe longitudinal central de l'ensemble de bol (200), l'axe de translation de l'ergot de verrouillage (122) étant non sécant à l'axe de réception (R) de la base (100).

3. Appareil électroménager selon la revendication 2, dans lequel en position verrouillée, la portion active de verrouillage (123) de l'ergot de verrouillage (122) s'étend tangentiellement à un cercle parallèle à la surface de réception (110) et ayant un centre passant par l'axe de réception (R).

4. Appareil électroménager selon l'une quelconque des revendications 1 à 3, dans lequel l'agencement de verrouillage (220) comprend une cavité de verrouillage (224) s'étendant vers l'intérieur à partir de la surface de fond (211) de l'ensemble de bol (200), la cavité de verrouillage (224) étant en partie formée par la paroi de verrouillage (221) dans laquelle est ménagé l'orifice de verrouillage (222).

5. Appareil électroménager selon la revendication 4, dans lequel la base (100) comprend un carter de protection (112) en saillie s'étendant vers l'extérieur à partir de la surface de réception (110), le carter de protection (112) étant destiné à être reçu dans la cavité de verrouillage (224) dans la position verrouillée,
dans lequel le carter de protection (112) est de préférence prévu pour recevoir l'ergot de verrouillage (122) de sorte que dans la position déverrouillée l'ergot de verrouillage (122) est entièrement logé à l'intérieur du carter de protection (112), et dans la position verrouillée la portion active de verrouillage (123) de l'ergot de verrouillage (122) s'étend au moins partiellement vers l'extérieur du carter de protection (112) dans l'orifice de verrouillage (222).

6. Appareil électroménager selon l'une quelconque des revendications 4 à 5, dans lequel la paroi de verrouillage (221) dans laquelle est ménagé l'orifice de verrouillage (222) s'étend vers l'intérieur à partir de la surface de fond (211) de l'ensemble de bol (200) de manière inclinée non perpendiculaire à la surface de fond (211) de l'ensemble de bol (200).

7. Appareil électroménager selon l'une quelconque des revendications 1 à 3, dans lequel l'agencement de verrouillage (220) comprend un élément en saillie s'étendant vers l'extérieur à partir de la surface de fond (211) de l'ensemble de bol (200), l'élément en saillie étant en partie formé par la paroi de verrouillage (221) dans laquelle est ménagé l'orifice de verrouillage (222), et dans lequel la surface de réception (110) comprend une cavité de verrouillage s'étendant vers l'intérieur de la base (100) et ayant une forme destinée à recevoir l'élément en saillie, l'orifice d'ergot (111) étant ménagé dans une paroi de la cavité s'étendant à partir de la surface de réception (110).

8. Appareil électroménager selon l'une quelconque des revendications 1 à 7, dans lequel le dispositif de verrouillage (120) comprend une pluralité d'ergots de verrouillage (122), chaque ergot de verrouillage (122) étant destiné à coopérer avec un orifice de verrouillage (222) respectif ménagé à travers la paroi de verrouillage (221) de l'embase (210) de l'ensemble de bol (200).

9. Appareil électroménager selon la revendication 8, dans lequel au moins deux ergots de verrouillage (122) parmi la pluralité d'ergots de verrouillage (122) sont agencés parallèles l'un par rapport à l'autre, les au moins deux ergots de verrouillage (122) étant montés en translation selon des axes de translation parallèles entre eux et s'étendant dans un plan de translation parallèle à la surface de réception (110).

10. Appareil électroménager selon la revendication 9, dans lequel les au moins deux ergots de verrouillage (122) sont configurés pour se déplacer dans le même sens de translation pour passer de la position verrouillée à la position déverrouillée, et réciproquement pour passer de la position déverrouillée à la position verrouillée.

11. Appareil électroménager selon l'une quelconque des revendications 1 à 10, dans lequel la base (100) comprend une cavité de réception (101) avec un fond formant la surface de réception (110), l'ensemble de bol (200) étant destiné à être positionné dans la cavité de réception de la base (100), la cavité de réception (101) et l'embase (210) de l'ensemble de bol (200) comprenant des éléments de détrompage (115, 215) coopérant pour autoriser un seul positionnement de l'ensemble de bol (200) dans la cavité de réception de la base (100),
dans lequel les éléments de détrompage (115, 215) comprennent de préférence des méplats formés respectivement sur les parois latérales de la cavité de réception et l'embase (210) de l'ensemble de bol (200).

12. Appareil électroménager selon l'une quelconque des revendications 1 à 11, comprenant en outre un dispositif de détection de présence de l'ensemble de bol (200) sur la base (100), le dispositif de détection comprenant des capteurs électroniques et/ou des capteurs mécanique pour détecter une présence de l'ensemble de bol (200) sur la surface de réception (110) de la base (100).

13. Appareil électroménager selon l'une quelconque des revendications 1 à 12, comprenant en outre un dispositif de commande configuré pour commander le dispositif d'entrainement (130) uniquement lorsque l'ensemble de bol (200) est positionné sur la surface de réception (110) de la base (100).

14. Appareil électroménager selon la revendication 13, comprenant en outre un moyen de mise sous tension de l'appareil et un moyen d'activation d'une préparation culinaire, le dispositif de commande étant configuré pour passer l'ergot de verrouillage (122) de la position déverrouillée à la position verrouillée lors de l'activation d'une préparation culinaire,
dans lequel le dispositif de commande est de préférence configuré pour passer l'ergot de verrouillage (122) de la position verrouillée à la position déverrouillée lors de l'arrêt d'une préparation culinaire.

15. Appareil électroménager selon l'une quelconque des revendications 1 à 14, dans lequel le dispositif d'entrainement (130) comprend un moteur d'entrainement distinct d'un moteur prévu dans la base (100) pour une préparation des aliments.
